# EUROPEAN PATENT APPLICATION

(11) **EP 2 466 899 A2**
(43) Date of publication of application: **20.06.2012**
(21) Application number: 11170501.8
(22) Date of filing: 20.06.2011
(51) Int. Cl.: H04N 13/00

(54) **Stereoscopic image transmitting apparatus and control method thereof, and stereoscopic image receiving apparatus and control method thereof**

(30) Priority: 14.12.2010 KR 20100127781
(71) Applicant: Samsung Electronics Co., Ltd., Suwon-si Gyeonggi-do 442-742 (KR)
(72) Inventor: Lee, Seung-yup, Gyeonggi-do (KR); Cho, Soon-jae, Gyeonggi-do (KR)
(74) Representative: Fearnside, Andrew Simon

(57) **Abstract**

Provided are an image transmitting apparatus and method, and an image receiving apparatus and method. The image transmitting apparatus includes: a video processor which converts a first video signal, including a left-eye image and a right-eye image corresponding to a frame of a three-dimensional (3D) image, into a second video signal by increasing a number of data bits per pixel of a first video signal and merging two pieces of pixel information respectively corresponding to the left-eye image and the right-eye image into one piece of pixel information; and a video output unit which transmits the second video signal.

## Description

### 1. Field

Apparatuses and methods consistent with exemplary embodiments relate to an image transmitting apparatus, an image receiving apparatus and a control method thereof, in which a three-dimensional (3D) video signal is transmitted/received and displayed as an image, and more particularly, to an image transmitting apparatus, an image receiving apparatus and a control method thereof, in which a 3D video signal is transmitted/received among a plurality of devices without deteriorating image quality.

### 2. Description of the Related Art

An image processing system is a system that processes a video signal, transmitted from an exterior or reproduced internally, to be displayed as an image. In this system, a plurality of apparatuses are connected according to predetermined transmission standards and a video signal is processed by a process preset for each apparatus, so that an image based on the processed video signal can be displayed. The video signal processed in the image processing system may be a 3D video signal, one video frame of which is divided into a left-eye image and a right-eye image, or a two-dimensional (2D) video signal having no such division.

The image processing system includes an image transmitting apparatus for transmitting a video signal, and an image receiving apparatus for receiving a video signal from the image transmitting apparatus. The image transmitting apparatus and the image receiving apparatus are configured to connect with each other based on various image processing standards, e.g., the high-definition multimedia interface (HDMI) standard, and thus each apparatus processes the transmitted/received video signal.

However, the image transmitting apparatus and the image receiving apparatus are independent of each other, so that the respective standards supported by the image transmitting apparatus and the image receiving apparatus may not match with each other. For example, if the standard supported by the image receiving apparatus is older than that of the image transmitting apparatus, the image receiving apparatus may not properly process a video signal received from the image transmitting apparatus, or may process the video signal such that the image quality is deteriorated as compared to its original image quality.

### SUMMARY

According to the present invention there is provided an apparatus and method as set forth in the appended claims. Other features of the invention will be apparent from the dependent claims, and the description which follows.

According to an aspect of an exemplary embodiment, there is provided an image transmitting apparatus including: a video processor which converts a first video signal, including a left-eye image and a right-eye image corresponding to a frame of a three-dimensional (3D) image, into a second video signal by increasing a number of data bits per pixel of the first video signal and merging two pieces of pixel information respectively corresponding to the left-eye image and the right-eye image into one piece of pixel information; and a video output unit which transmits a video signal to an image receiving apparatus.

The video processor may at least double the number of data bits per pixel of the first video signal.

The second video signal may have a same sync period as a third video signal corresponding to a two-dimensional (2D) image having a same resolution as the second video signal.

The video processor may insert two pixel values corresponding to respective pixels of the left-eye image and the right-eye image of the first video signal to preset data-bit positions of one pixel of the second video signal.

The second video signal may have a transmission standard corresponding to a 2D image.

According to an aspect of another exemplary embodiment, there is provided an image receiving apparatus including: a video receiver which receives a second video signal from an image transmitting apparatus; and a video processor which converts the second video signal into a first video signal, including a left-eye image and a right-eye image, so that an image based on the first video signal is displayable if it is determined that the second video signal is generated by increasing a number of data bits per pixel of the first video signal and merging two pieces of pixel information respectively corresponding to the left-eye image and the right-eye image into one piece of pixel information.

A number of data bits per pixel of the second video signal may be more than twice the number of data bits per pixel of the first video signal.

The second video signal may have a same sync period as a third video signal corresponding to a two-dimensional (2D) image having a same resolution as the second video signal.

The video processor may derive two pixel values corresponding to respective pixels of the left-eye image and the right-eye image of the first video signal according to a preset data-bit position from one pixel of the second video signal.

The first video signal may have a transmission standard corresponding to a 2D image.

According to an aspect of another exemplary embodiment, there is provided a method of controlling an image transmitting apparatus, the method including: converting a first video signal, including a left-eye image and a right-eye image, into a second video signal by increasing a number of data bits per pixel of the first video signal and merging two pieces of pixel information respectively corresponding to the left-eye image and the right-eye image into one piece of pixel information; and transmitting the second video signal to an image receiving apparatus.

The converting the first video signal into the second video signal may include at least doubling the number of data bits per pixel of the first video signal.

The second video signal may have a same sync period as a third video signal corresponding to a two-dimensional (2D) image having a same resolution as the second video signal.

The converting the first video signal into the second video signal may include inserting two pixel values corresponding to respective pixels of the left-eye image and the right-eye image of the first video signal to preset data-bit positions of one pixel of the second video signal.

The second video signal may have a transmission standard corresponding to a 2D image.

According to an aspect of another exemplary embodiment, there is provided a method of controlling an image receiving apparatus, the method including: receiving a second video signal from a video transmitting apparatus; and converting the second video signal into a first video signal, including a left-eye image and a right-eye image, so that an image based on the first video signal is displayable if it is determined that the second video signal is generated by increasing a number of data bits per pixel of the first video signal and merging two pieces of pixel information respectively corresponding to the left-eye image and the right-eye image into one piece of pixel information.

A number of data bits per pixel of the second video signal may be more than twice the number of data bits per pixel of the first video signal.

The second video signal may have a same sync period as a third video signal corresponding to a two-dimensional (2D) image having a same resolution as the second video signal.

The converting the second video signal into the first video signal may include deriving two pixel values corresponding to respective pixels of the left-eye image and the right-eye image of the first video signal according to preset data-bit positions from one pixel of the second video signal.

The second video signal may have a transmission standard corresponding to a 2D image.

According to an aspect of another exemplary embodiment, there is provided a method of controlling an image receiving apparatus, the method including: receiving a second video signal from a video transmitting apparatus; and converting the second video signal into a first video signal, including a left-eye image and a right-eye image corresponding to a frame of a three-dimensional (3D) image, by deriving two pieces of pixel information respectively corresponding to the left-eye image and the right-eye image from one piece of pixel information of the second video signal.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 illustrates an example of an image processing system according to an exemplary embodiment;
FIG. 2 is a block diagram of an image processing system according to an exemplary embodiment;
FIG. 3 illustrates an example showing a relationship between a sync and a video frame of a first video signal corresponding to a 3D image in an image transmitting apparatus of FIG. 1;
FIG. 4 illustrates an example showing a relationship between a sync and a video frame of a second video signal converted from the first video signal in the image transmitting apparatus of FIG. 1;
FIG. 5 illustrates an example showing a relationship between a sync and a video frame when the second video signal is converted into the first video signal in an image receiving apparatus of FIG. 1;
FIG. 6 is a control flowchart showing a control method of an image transmitting apparatus according to an exemplary embodiment; and
FIG. 7 is a control flowchart showing a control method of an image receiving apparatus according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. Exemplary embodiments may be embodied in various forms without being limited to the exemplary embodiments set forth herein. Descriptions of well-known parts are omitted for clarity, and like reference numerals refer to like elements throughout. Expressions such as "at least one of," when preceding a list of elements, modify the entire list of elements and do not modify the individual elements of the list.

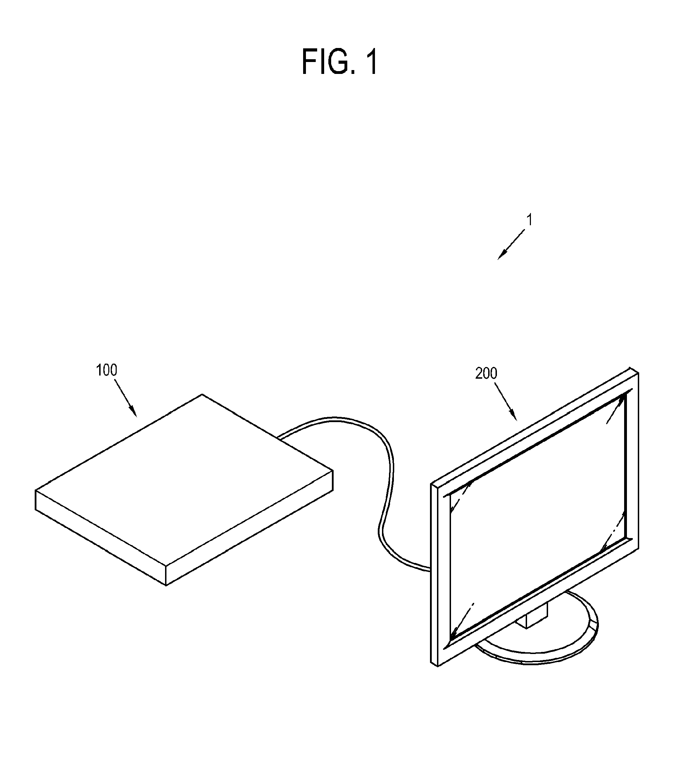

FIG. 1 illustrates an example of an image processing system 1 according to an exemplary embodiment.

As shown in FIG. 1, the image processing system 1 includes an image transmitting apparatus 100 which outputs a video signal, and an image receiving apparatus 200 connected (for example, through at least one of a wired connection and a wireless connection) to the image transmitting apparatus 100 and receiving a video signal from the image transmitting apparatus 100.

The realization and number of the respective apparatuses 100 and 200 of the image processing system 1 may vary. While in the present exemplary embodiment, the image transmitting apparatus 100 and the image receiving apparatus 200 may respectively be a set-top box and a television (TV), it is understood that another exemplary embodiment is not limited thereto. For example, according to other exemplary embodiments, each apparatus 100, 200 may be a compact disc (CD) player, a digital versatile disc (DVD) player, a Blu-ray disc player, a vide tape recorder, a computer main body, a monitor, a portable media player, etc.

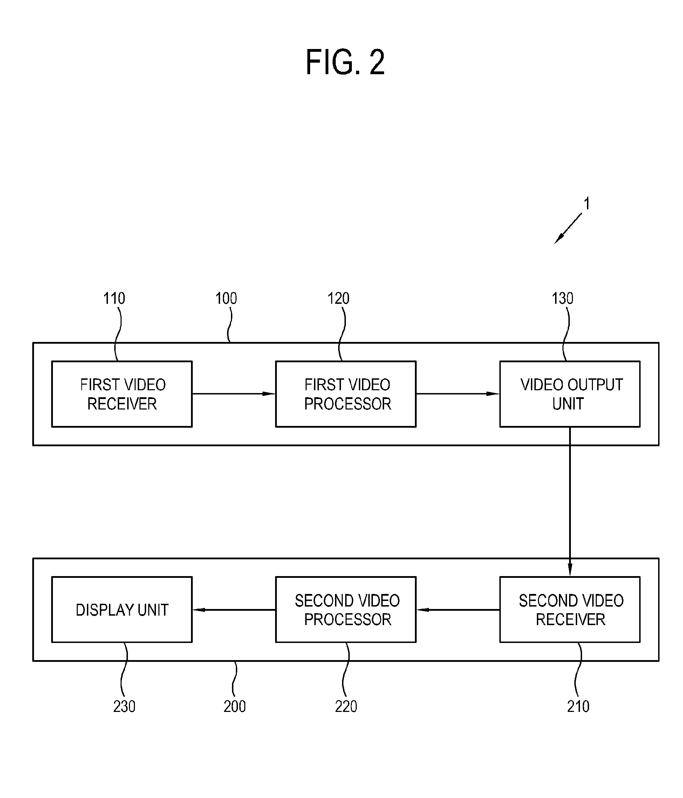

Below, detailed configurations of the image transmitting apparatus 100 and the image receiving apparatus 200 will be described with reference to FIG. 2. FIG. 2 is a block diagram of the image transmitting apparatus 100 and the image receiving apparatus 200 according to an exemplary embodiment.

As shown in FIG. 2, the image transmitting apparatus 100 includes a first video receiver 110 for receiving a video signal from an exterior, a first video processor 120 for processing the video signal received by the first video receiver 110 on the basis of a preset video process, and a video output unit 130 for transmitting the video signal processed by the first video processor 120.

The image receiving apparatus 200 includes a second video receiver 210 for receiving the video signal output from the video output unit 130, a second video processor 220 for processing the video signal received by the second video receiver 210 on the basis of a preset video process, and a display unit 230 for displaying the video signal processed by the second video processor 220 as an image.

The configuration of the image transmitting apparatus 100 is as follows.

The first video receiver 110 wiredly or wirelessly receives a video signal from an external video source (not shown) and transmits the received video signal to the first video processor 120. The first video receiver 110 receives the video signal based on any of various standards, e.g., high definition multimedia interface (HDMI) standards. While in the present exemplary embodiment, the first video receiver 110 receives a video signal from an exterior, it is understood that another exemplary embodiment is not limited thereto. For example, if the video transmitting apparatus 100 is a DVD or Blu-ray disc player or the like, the video transmitting apparatus 100 may be configured to generate a video signal by itself and transmit the generated video signal to the first video processor 120.

The first video processor 120 performs various video processes previously set with regard to a video signal transmitted from the first video receiver 110. For example, the video processes performed in the first video processor 120 may include at least one of decoding, encoding, de-interlacing, frame refresh rate conversion, scaling, noise reduction for enhancing image quality, detail enhancement, etc. The first video processor 120 may be achieved by a set of modules independently performing such operations, respectively, or may be achieved by an integrated configuration like a system-on-chip.

The video output unit 130 outputs the video signal processed by the first video processor 120 on the basis of a preset standard, e.g., an HDMI standard. The video output unit 130 may include a separate communication channel (not shown) through which the video signal and at least one of data, information, and a control signal can be exchanged between the image transmitting apparatus 100 and the image receiving apparatus 200.

The configuration of the image receiving apparatus 200 is as follows.

The second video receiver 210 receives a video signal transmitted from the video output unit 130 and transmits the received video signal to the second video processor 220. The second video receiver 210 is provided to match with the transmission standard of the video output unit 130, and may have a communication channel (not shown) through which a video signal and data can be exchanged between the image transmitting apparatus 100 and the image receiving apparatus 200.

The second video processor 220 performs processing previously set with regard to the video signal received by the second video receiver 210. Similarly to the first video processor 120, the processing performed by the second video processor 220 may be achieved variously without limitation.

The display unit 230 displays an image based on a video signal transmitted from the second video processor 220. For example, the display unit 230 may be achieved by various display types such as liquid crystal, plasma, light-emitting diode, organic light-emitting diode, surface-conduction electron emitter, carbon nano-tube, nano-crystal, etc., without limitation.

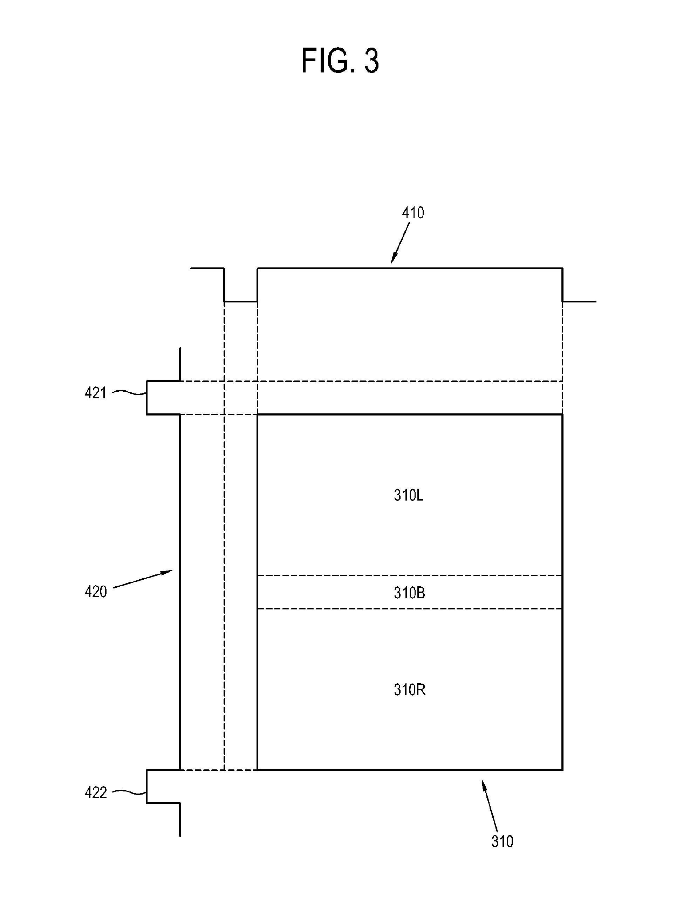

With this configuration, if a video signal corresponds to a 3D image, the first video processor 120 processes the video signal to be divided into a left-eye image and a right-eye image within one video frame. For example, in the case of a predetermined first video signal corresponding to a 3D image, one video frame may be illustrated as shown in FIG. 3 according to a frame packing method based on the HDMI standards.

FIG. 3 illustrates an example showing a relationship between a sync and a video frame of a first video signal corresponding to a 3D image in the image transmitting apparatus 100, and more specifically illustrates that a horizontal sync signal 410 and a vertical sync signal 420 are arranged corresponding to one video frame 310 in a 3D video signal.

In particular, the video frame 310 is located between successive syncs 421 and 422 of the vertical sync signal 420. The video frame 310 is divided into a left-eye image 310L, a right-eye image 310R, and a non-image section 310B located between the left-eye image 310L and the right-eye image 310R and having no video data.

If both the image transmitting apparatus 100 and the image receiving apparatus 200 support the HDMI standards, the first video processor 120 may transmit a video signal having the standard as shown in FIG. 3 through the video output unit 130, and the second video processor 220 may process the video signal received in the second video receiver 210 and display the processed video signal on the display unit 230. That is, in this case, the second video processor 220 determines the non-image section 310B within the video frame 310, thereby extracting the left-eye image 310L and the right-eye image 310R.

However, the image receiving apparatus 200 may not be capable of processing the video signal configured as shown in FIG. 3 if, for example, the type of the image receiving apparatus 200 is older than that of the image transmitting apparatus 100, if the HDMI standards supportable by the image receiving apparatus 200 do not support the video signal configured as shown in FIG. 3, or by like reason. In this case, there is no sync corresponding to the non-image section 310B in the vertical sync signal 420, so that the image receiving apparatus 200 cannot determine the non-image section 310B and thus cannot extract the left-eye image 310L and the right-eye image 310R from the video signal.

According to an exemplary embodiment, the first video processor 120 increases the number of data bits per pixel of a first video signal including the left-eye image 310L and the right-eye image 310R, and merges two pieces of pixel information respectively corresponding to the left-eye image 310L and the right-eye image 310R into one piece of pixel information, thereby converting the first video signal into a second video signal.

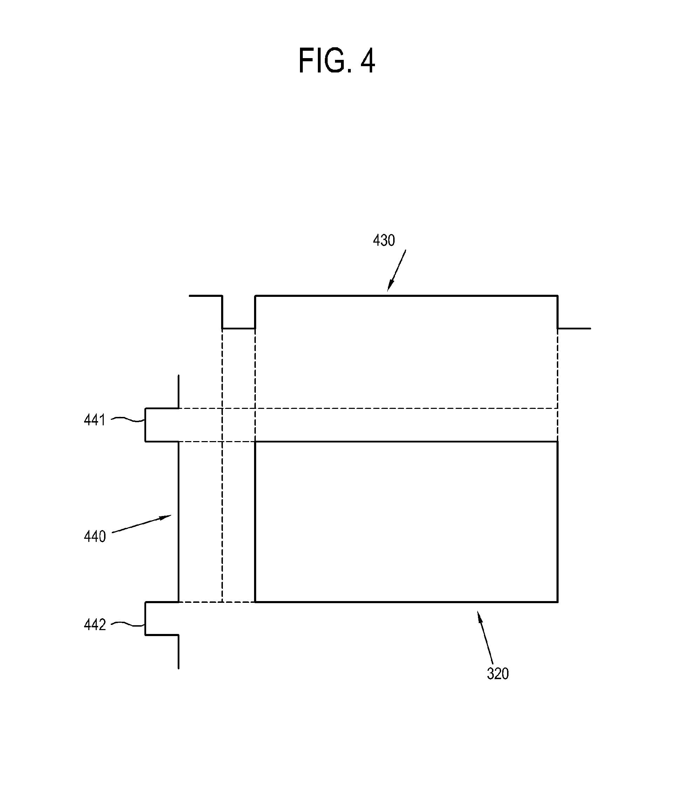

FIG. 4 illustrates an example showing a relationship between a sync and a video frame of a second video signal converted from the first video signal in the image transmitting apparatus.

As shown in FIG. 4, the first video processor 120 sets up to double the number of data bits per pixel when converting the first video signal into the second video signal, since one video frame 310 of the first video signal includes the left-eye image 310L and the right-eye image 310R.

The first video processor 120 resets a period for syncs 441 and 442 of the vertical sync signal 440 to correspond to the left-eye image 310L and the right-eye image 310R, respectively. Here, the period for the syncs 441 and 442 of the second video signal is the same as a video signal corresponding to a two-dimensional (2D) image having the same resolution.

Further, the first video processor 120 merges respective pieces of pixel information of the left-eye image 310L and the right-eye image 310R of the first video signal into one piece of pixel information of the second video signal. That is, one pixel of the second video signal is formed by merging two pixels corresponding to the left-eye image 310L and the right-eye image 310R of the first video signal, and therefore the number of data bits per pixel of the second video signal is at least twice that of the first second signal.

Without limitation, any of various methods of merging two pixels corresponding to the left-eye image 310L and the right-eye image 310R of the first video signal may be provided according to one or more exemplary embodiments. For example, according to another exemplary embodiment, the first video processor 120 sets pixel values of the respective pixels corresponding to the left-eye image 310L and the right-eye image 310R of the first video signal to correspond to preset data-bit positions of one pixel of the second video signal.

For example, if each pixel of the left-eye image 310L and the right-eye image 310R of the first video signal has 8-bit information, the first video processor 120 may arrange the pixel value of the left-eye image 310L to the first 8 bits, and arrange the pixel value of the right-eye image 310R to the latter 8 bits. Alternatively, the first video processor 120 may arrange the pixel value of the left-eye image 310L to an odd-numbered data bit position, and may arrange the pixel value of the right-eye image 310R to an even-numbered data bit position.

The second video signal converted by this method may have a transmission standard corresponding to a 2D video signal having the same resolution. That is, if the image receiving apparatus 200 cannot normally process the first video signal having the standard as shown in FIG. 3, the first video processor 120 generates the second video signal having the transmission standard corresponding to the 2D video signal so that the image receiving apparatus 200 can process the second video signal, and then transmits the second video signal to the image receiving apparatus 200.

Meanwhile, if the second video signal is transmitted to the image receiving apparatus 200, the second video processor 220 determines whether the second video signal is a 2D video signal or a video signal converted from the first video signal as described above. Such determining method may vary in various exemplary embodiments.

For example, in an initial stage where the second video signal is transmitted, related information is included in the second video signal and transmitted by the first video processor 120. In this case, the second video processor 220 extracts such information and performs the determination. Also, the related information may be transmitted from the first video processor 120 to the second video processor 220 through a communication channel (not shown) configured between the image transmitting apparatus 100 and the image receiving apparatus 200, so that the second video processor 220 can perform the above determination on the basis of the transmitted related information.

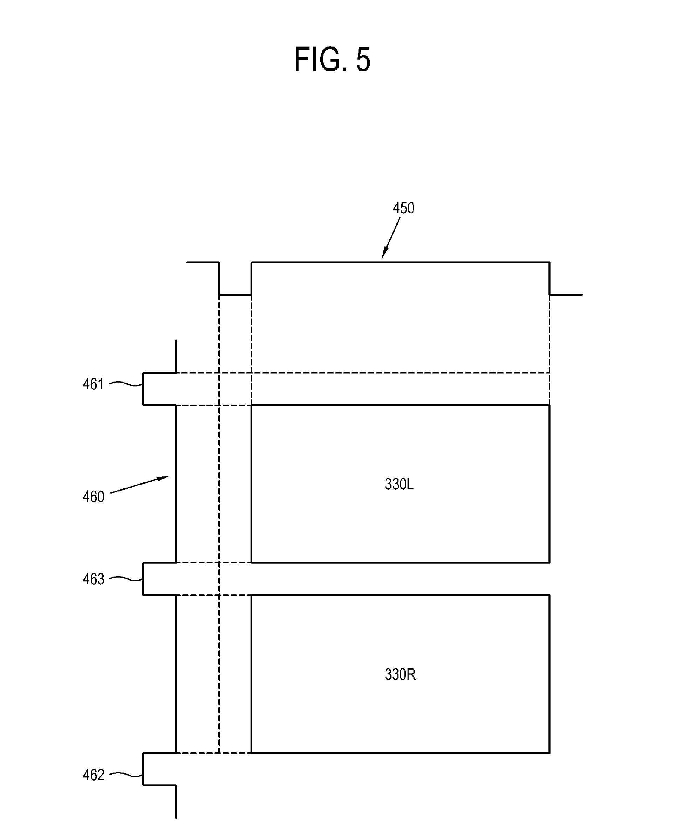

If the second video processor 220 determines that the second video signal received in the second video receiver 210 is converted from the first video signal, the second video processor 220 converts the second video signal into the first video signal as shown in FIG. 5 by a reverse method to the process for converting the first video signal into the second video signal.

FIG. 5 illustrates an example showing a relationship between a sync and a video frame when the second video signal is converted into the first video signal in an image receiving apparatus 200 according to an exemplary embodiment.

For example, the second video processor 220 adjusts a period for a horizontal sync signal 450 and a vertical sync signal 460 to correspond to the first video signal. Further, the second video processor 220 derives two pieces of pixel information, i.e., pixel values, corresponding to respective pixels of the left-eye image 310L and the right-eye image 310R of the first video signal on the basis of the preset data-bit positions from the pixel information of one pixel of the second video signal.

The second video processor 220 generates the left-eye image 310L and the right-eye image 310R of the first video signal from the pixel information derived as such, and displays the generated left-eye image 310L and right-eye image 310R on the display unit 230.

Here, the second video processor 220 may use various methods for distinguishing the non-image section 310B while converting the second video signal into the first video signal. For example, the second video processor 220 may generate a new sync 463 in a section of the vertical sync signal 460 corresponding to the non-image section between the left-eye image 310L and the right-eye image 310R, when generating the first video signal. Thus, in accordance with the syncs 461, 462, 463 of the vertical sync signal 460, the second video processor 220 can process the left-eye image 310L and the right-eye image 310R of the first video signal to be divided and displayed.

According to an exemplary embodiment, when the first video signal corresponding to a 3D image is transmitted from the image transmitting apparatus 100 to the image receiving apparatus 200, the second video signal is generated by increasing the number of data bits per pixel of the first video signal and merging two pieces of pixel information respectively corresponding to the left-eye image and the right-eye image, and is transmitted to the image receiving apparatus 200. Thus, even though the image receiving apparatus 200 does not support the frame packing method based on the HDMI standards, the 3D video signal can be transmitted from the image transmitting apparatus 100 to the image receiving apparatus 200 without deteriorating image quality.

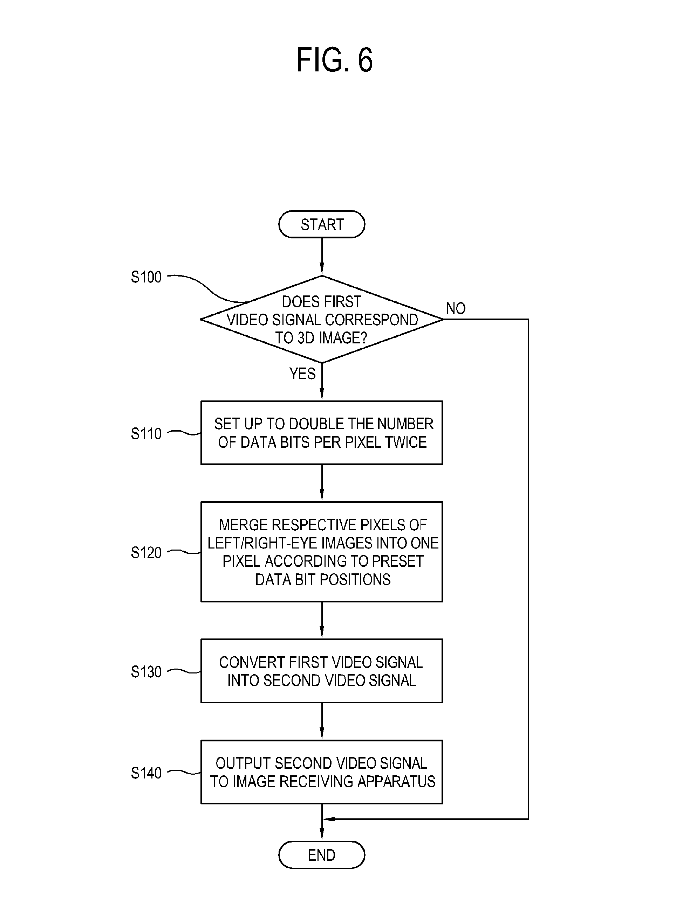

Below, a control method of the image transmitting apparatus 100 according to an exemplary embodiment will be described with reference to FIG. 6. FIG. 6 is a control flowchart showing such a control method.

As shown in FIG. 6, the first video processor 120 determines whether a predetermined first video signal corresponds to a 3D image at operation S100.

If the first video signal corresponds to the 3D image, the first video processor 120 sets up to double the number of data bits per pixel of the first video signal at operation S110. In accordance with preset data-bit positions, the first video processor 120 merges pixels respectively corresponding to the left-eye image and the right-eye image into one pixel at operation S120, and converts the first video signal into the second video signal by this process at operation S130.

The first video processor 120 outputs the second video signal to the image receiving apparatus 200 through the video output unit 130 at operation S140.

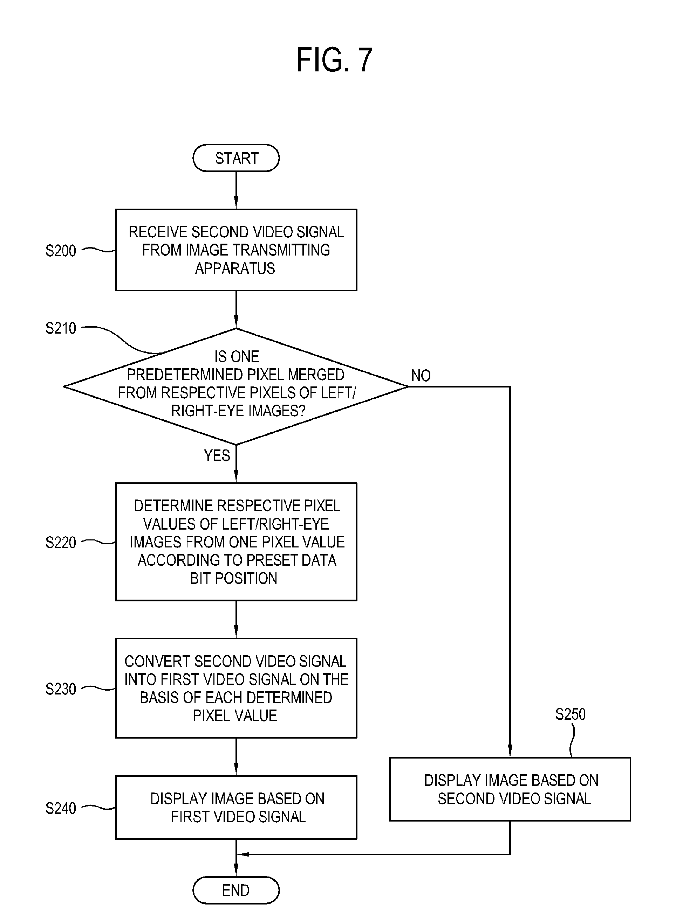

Below, a control method of the image receiving apparatus 200 according to an exemplary embodiment will be described with reference to FIG. 7. FIG. 7 is a control flowchart showing such a control method.

As shown in FIG. 7, if receiving the second video signal from the image transmitting apparatus 100 at operation S200, the second video processor 220 determines whether one predetermined pixel of the second video signal is formed by merging pixels respectively corresponding to the left-eye image and the right-eye image at operation S210.

If it is determined that one pixel of the second video signal is formed by merging pixels respectively corresponding to the left-eye image and the right-eye image, the second video processor 220 determines respective pixel values of the left-eye image and the right-eye image from the one pixel value in accordance with the preset data-bit positions at operation S220. Further, the second video processor 220 converts the second video signal into the first video signal on the basis of respective pixel values determined as such at operation S230.

The second video processor 220 displays an image based on the first video signal at operation S240.

On the other hand, in operation S210, if it is determined that one pixel of the second video signal is not formed by merging pixels respectively corresponding to the left-eye image and the right-eye image, the second video processor 220 determines that the second video signal corresponds to a 2D image, and displays an image based on the second video signal (operation S250).

While in the above-described exemplary embodiments, the video signal is processed by the HDMI standards, it is understood that other exemplary embodiments are not limited thereto. For example, another exemplary embodiment may be applied to not only when a digital video signal is transmitted between the image transmitting apparatus 100 and the image receiving apparatus 200, but also when an analog video signal is transmitted.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, one or more units of the image transmitting apparatus 100 and the image receiving apparatus 200 can include a processor or microprocessor executing a computer program stored in a computer-readable medium.

Although a few exemplary embodiments have been shown and described, it will be appreciated by those skilled in the art that changes may be made in these exemplary embodiments without departing from the principles and spirit of the inventive concept, the scope of which is defined in the appended claims and their equivalents.

## Claims

1. An image transmitting apparatus comprising:
a video processor which converts a first video signal into a second video signal by increasing a number of data bits per pixel of the first video signal, including a left-eye image and a right-eye image, and merging two pixel information respectively corresponding to the left-eye image and the right-eye image into one pixel information; and
a video output unit which transmits the second video signal to an image receiving apparatus.

2. The image transmitting apparatus according to claim 1, wherein the video processor sets up to make a number of data bits per pixel of the second video signal be more than twice that of the first video signal.

3. The image transmitting apparatus according to claim 1, wherein the second video signal has a same period as a third video signal corresponding to a two-dimensional (2D) image having a same resolution.

4. The image transmitting apparatus according to claim 1, wherein the video processor makes two pixel values corresponding to respective pixels of the left-eye image and the right-eye image of the first video signal correspond to a preset data-bit position of one pixel of the second video signal.

5. The image transmitting apparatus according to claim 4, wherein the second video signal has transmission standards corresponding to a 2D image.

6. An image receiving apparatus comprising:
a video receiver which receives a first video signal from an image transmitting apparatus; and
a video processor which converts the first video signal into a second video signal so that an image based on the second video signal is displayable if it is determined that the first video signal is generated by increasing a number of data bits per pixel of the second video signal, including a left-eye image and a right-eye image, and merging two pixel information respectively corresponding to the left-eye image and the right-eye image into one pixel information.

7. The image receiving apparatus according to claim 6, wherein a number of data bits per pixel of the first video signal is more than twice the number of data bits per pixel of the second video signal.

8. The image receiving apparatus according to claim 6, wherein the first video signal has a same period as a third video signal corresponding to a two-dimensional (2D) image having a same resolution.

9. The image receiving apparatus according to claim 6, wherein the video processor derives two pixel values corresponding to respective pixels of the left-eye image and the right-eye image of the second video signal on the basis of a preset data-bit position from one pixel of the first video signal.

10. The image receiving apparatus according to claim 9, wherein the first video signal has transmission standards corresponding to a 2D image.

11. A method of controlling an image transmitting apparatus, the method comprising:
converting a first video signal into a second video signal by increasing a number of data bits per pixel of the first video signal, including a left-eye image and a right-eye image, and merging two pixel information respectively corresponding to the left-eye image and the right-eye image into one pixel information; and
transmitting the second video signal to an image receiving apparatus.

12. A method of controlling an image receiving apparatus, the method comprising:
receiving a first video signal from a video transmitting apparatus; and
converting the first video signal into a second video signal so that an image based on the second video signal is displayable if it is determined that the first video signal is generated by increasing a number of data bits per pixel of the second video signal, including a left-eye image and a right-eye image, and merging two pixel information respectively corresponding to the left-eye image and the right-eye image into one pixel information.
